# EUROPÄISCHE PATENTSCHRIFT

(11) **EP 1 719 976 B1**
(45) Veröffentlichungstag und Bekanntmachung des Hinweises auf die Patenterteilung: **17.11.2010**
(21) Anmeldenummer: 06112244.6
(22) Anmeldetag: 05.04.2006
(51) Int. Cl.: G01C 21/26

(54) **Verfahren zur Lokalisierung eines Streckenabschnitts in einer Karte**
Method for localising a route section on a map
Procédé destiné à la localisation d'un tronçon sur une carte

(30) Priorität: 02.05.2005 DE 102005020361
(43) Veröffentlichungstag der Anmeldung: 08.11.2006
(73) Patentinhaber: ROBERT BOSCH GMBH, 70442 Stuttgart (DE)
(72) Erfinder: Pfeiffer, Heinz-Werner, 31249, Hohenhameln (DE); Wartenberg, Maylin, 38114, Braunschweig (DE)

(56) Entgegenhaltungen:
- EP-A- 0 261 404
- EP-A- 1 122 518

## Beschreibung

Die vorliegende Erfindung betrifft ein Verfahren zur Lokalisierung eines bestimmten Streckenabschnitts aus einer ersten digitalisierten Karte eines Verkehrswegenetzes in einer zweiten digitalisierten Karte des Verkehrswegenetzes.

Als Grundlage für eine Fahrzeugnavigation greifen Navigationssysteme auf digitalisierte Karten des Verkehrswegenetzes bzw. Straßennetzes zu. Diese Karten sind nicht standardisiert, so dass es bei Karten unterschiedlicher Hersteller zu Abweichungen in der digitalisierten Karteninformation kommt.

Bei heutigen Navigationssystemen erfolgt oftmals die Routenberechnung und Zielführung dynamisch. D.h., das Navigationssystem ist in der Lage, von außen empfangene, aktuelle Informationen zusätzlich zu der in dem Navigationssystem gespeicherten Information zu berücksichtigen. Beispielsweise ist durch Auswertung von RDS-TMC-codierter Verkehrsmeldungen eine automatische Umfahrung eines Verkehrstaus möglich.

Das bedeutet, dass ein Verkehrsereignis einem bestimmten Streckenabschnitt zugeordnet wird, der in einer ersten Karte lokalisiert wird. Diese Ortsinformation wird an ein Navigationssystem übertragen, das nun seinerseits die genaue Position für das Verkehrsereignis, also den zugeordneten Streckenabschnitt, in der dem Navigationssystem zur Verfügung stehenden Karte lokalisiert, um die aktuell empfangene Information zu berücksichtigen. Diese Lokalisierung wird auch mit Referenzierung bezeichnet.

Es ist bekannt, dass für bestimmte Straßenabschnitte jeweils eine Codierung bzw. ein Code definiert ist. Mit dieser statischen Referenzierung kann beispielsweise ein bestimmter Abschnitt einer Autobahn eindeutig bezeichnet und dadurch lokalisiert werden. Die statische Referenzierung ist aber für das vollständige Straßennetz aufgrund der benötigten Datenmenge nicht durchführbar und ist somit in der praktischen Anwendung auf Autobahnen und autobahnähnlich ausgebaute Bundesstraßen begrenzt.

Eine andere Referenzierung eines Abschnitts des Straßennetzes, der auch mit Location bezeichnet werden kann, sieht vor, dass im Wesentlichen Koordinaten von Stützpunkten bzw. Shape-Points des Straßenabschnitts in einer Anwendung codiert und an eine weitere Anwendung übertragen werden, die die entsprechenden Daten decodiert. Anhand dieser Koordinaten wird die entsprechende Location wieder identifiziert. Diese zu übertragenen Koordinaten werden teils äquidistant und teils mit Hilfe bestimmter Algorithmen, beispielsweise der Douglas-Peuker-Algorithmus, ausgewählt. Zum Decodieren wird dann eine Korrelation mit den Daten der Empfängerkarte berechnet, wobei die übertragenen Koordinaten in einem bestimmten Rahmen verschoben werden. Bei einem Maximum wird eine korrekte Verschiebung angenommen und somit der entsprechende Straßenabschnitt bzw. die entsprechende Location identifiziert.

So ist z. B. aus der EP 1 122 518 A1 ein Verfahren zur Decodierung von linienförmigen geographischen Objekten bekannt.

Ohne die Verwendung weiterer Attribute ist allerdings die Identifizierung eines Streckenabschnitts oft unzureichend, da beispielsweise parallele Fahrbahnen nicht unterschieden werden können. Auch mit Berücksichtigung weiterer Attribute, wie der Fahrtrichtung, kann oft kein eindeutiges Maximum der Korrelation bestimmt werden.

Daher ist es die Aufgabe der vorliegenden Erfindung, ein verbessertes Verfahren zum Identifizieren der korrekten Streckenabschnitte in einer digitalisierten Karte bereitzustellen.
Diese Aufgabe wird durch ein Verfahren mit den Merkmalen gemäß Anspruch 1 gelöst.

Erfindungsgemäß wird bei einem gattungsgemäßen Verfahren eine erste Rasterfläche aus Rasterelementen an einer definierten Ortskoordinate in der ersten Karte festgelegt, so dass der Streckenabschnitt in der Rasterfläche angeordnet ist. Diejenigen Rasterelemente werden markiert, in denen ein Verkehrsweg, beispielsweise eine Straße, eine Schienenstrecke oder eine Wasserstraße, verläuft. Ferner wird eine zweite Rasterfläche aus Rasterelementen an der Ortskoordinate in der zweiten Karte festgelegt und die Rasterelemente markiert, in denen ein Verkehrsweg verläuft. Anschließend können die zweite Rasterfläche verschoben und erneut Rasterelemente markiert werden, bis die Übereinstimmung der Muster der markierten Rasterelemente der ersten und der zweiten Rasterfläche maximal wird. Das Verfahren ist ferner zur Referenzierung einer Stromleitung oder jedes anderen im Allgemeinen mittels eines Polygons darstellbaren Streckenverlaufs geeignet.

Die Position der Ortskoordinate definiert die Anordnung der Abbildung der Rasterfläche auf die digitalisierte Karte. Durch die Geometrie der die Rasterfläche bildenden Rasterelemente wird der entsprechende Ausschnitt des Verkehrswegenetzes in einer gröberen Auflösung abgebildet. Geringfügige Abweichungen des Verkehrswegenetzes in den digitalisierten Karten bewirken somit nur eine minimale Veränderung des Musters in der Rasterfläche. Somit können die beiden Karten ausschnittsweise miteinander verglichen werden, um einen bestimmten Streckenabschnitt des Verkehrswegenetzes in beiden Kartendarstellungen zu lokalisieren.

Bevorzugt weisen die Rasterelemente die gleiche Form und Größe auf. Wesentlich ist jedoch, dass die beiden Rasterflächen in gleicher Weise in Rasterelemente aufgeteilt sind, die die zu rasternde Fläche vollständig und disjunkt überdecken. Bevorzugter sind die Rasterelemente und/oder die Rasterfläche rechteckig. Beispielsweise kann auf den jeweiligen Kartenausschnitt ein Gitternetz aus zueinander äquidistanten Gitterlinien projiziert werden, um in einfacher Weise die Form und Größe der Rasterelemente zu definieren.

In vorteilhafter Weise wird als Ortskoordinate ein Eckpunkt der Rasterfläche definiert. Es ist aber auch möglich, als Ortskoordinate den Mittelpunkt der Rasterfläche zu definieren. Durch die geeignet ausgewählte Ortskoordinate und die Beschaffenheit der Rasterelemente, insbesondere der Form und Anzahl der Rasterelemente, ist die Rasterfläche eindeutig bestimmt.

Bevorzugt wird die Ortskoordinate derart ausgewählt, dass der Streckenabschnitt durch einen Eckpunkt der Rasterfläche verläuft. Dies ermöglicht eine einfache Definition des Verhältnisses der Rasterfläche und der Ortskoordinate zueinander.

In vorteilhafter Weise wird das Muster der ersten markierten Rasterfläche binär codiert und übertragen. Das relativ einfache Binärbild kann durch geeignete Codierungsverfahren weiter komprimiert werden. Dies reduziert die zu übertragende Datenmenge.

Eine vorteilhafte Ausführung des erfindungsgemäßen Verfahrens sieht vor, dass die Rasterelemente markiert werden, in denen eine Straße einer bestimmten Straßenklasse verläuft. Hierdurch wird das Muster der Rasterfläche vereinfacht, da nur Straßen einer vorher bestimmten Größe bzw. Klasse berücksichtigt werden. Somit wird ein Vergleich zweier gemusterter Rasterflächen vereinfacht.

Eine weitere vorteilhafte Ausgestaltung des erfmdungsgemäßen Verfahrens sieht vor, dass beim Markieren der Rasterelemente diejenigen Rasterelemente nicht berücksichtigt werden, in denen eine Straßenkreuzung liegt. Straßenkreuzungen sind oftmals die Stellen, an denen die größten Unterschiede zwischen Karten verschiedener Hersteller auftreten. Durch das Auslassen dieser besonders kritischen Stellen wird ein zügiges Auffinden des gesuchten Streckenabschnitts ermöglicht.

Nachfolgend wird die Erfindung anhand der beigefügten Figuren beispielhaft näher erläutert. Diese zeigen in:
- Figur 1 -: eine schematische Skizze zweier Kartendarstellungen, die miteinander verglichen werden;
- Figuren 2 a - c -: eine Rasterfläche zur Referenzierung eines Streckenabschnitts einer Straße;
- Figur 3 -: eine Rasterfläche zur Referenzierung eines Streckenabschnitts eines Straßennetzes mit Kreuzungen;
- Figuren 4 a - c -: Rasterflächen zur Unterscheidung zweier paralleler Fahrbahnen eines Straßenabschnitts.

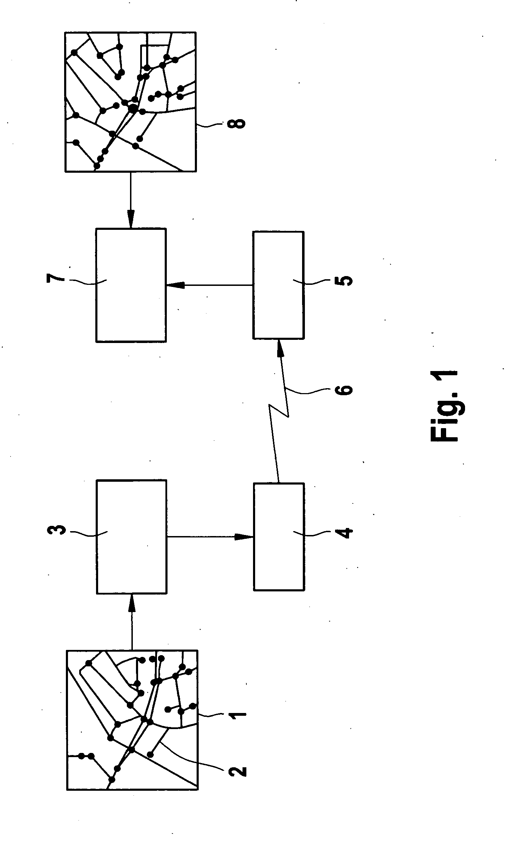

In der Figur 1 ist eine Kartendarstellung 1 gezeigt, in dem sich ein Streckenabschnitt 2 eines Ausschnitts eines Straßennetzes befmdet, der zu lokalisieren ist. Eine Anwendung 3, beispielsweise eine Verkehrsleitstelle, greift auf die Kartendarstellung 1 zu, beispielsweise um einen Verkehrsstau und/oder eine Baustelle in diesem Streckenabschnitt 2 zu melden. Weitere mögliche Verwendungen des erfindungsgemäßen Verfahrens können die Referenzierung von Points of Interest, beispielsweise die Lage von Restaurants und/oder Hotels, oder die Einfügung neuer Kartendaten in digitalisierte Karten sein. Die Anwendung 3 codiert mit dem nachfolgend beschriebenen erfindungsgemäßen Verfahren die entsprechende Straßeninformation zur Identifizierung des Streckenabschnitts 2 und übergibt die codierten Daten an eine geeignete Sendeeinrichtung 4.

Die Sendeeinrichtung 4 überträgt anschließend die codierten Straßendaten an eine Empfangseinrichtung 5. Die Übertragung, in der Figur 1 dargestellt durch einen gezackten Pfeil 6, kann beispielsweise eine drahtlose Funkübertragung sein, beispielsweise über das digitale Datenübertragungssystem für UKW-Sender RDS (Radio Data System). Ferner ist eine Übertragung über das Internet oder DAB (Digital Audio Broadcasting) möglich.

Die Empfangsvorrichtung 5 leitet die codierten Daten an die Anwendung 7 weiter, die die empfangenen Daten decodiert. Die Anwendung 7 greift auf eine Straßenkarte 8 zu, um den entsprechenden Streckenabschnitt in dieser Karte zu lokalisieren. Die Anwendung 7 kann beispielsweise ein Navigationssystem sein, das nun in der Lage ist, die Verkehrsmeldung bei der Routenplanung und Zielführung zu berücksichtigen.

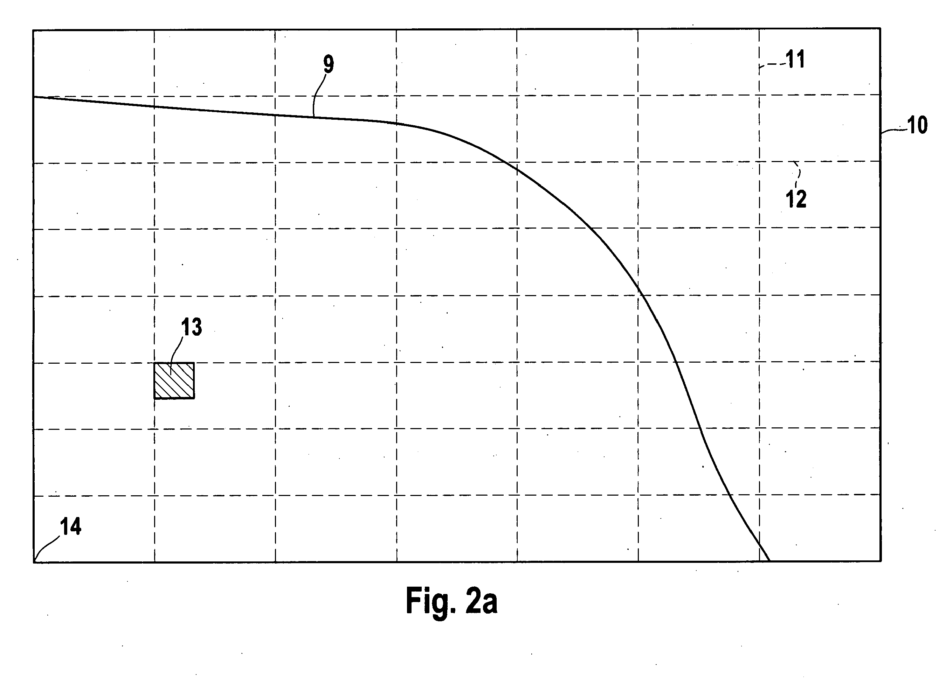

In der Figur 2a ist ein Streckenabschnitt 9 eines Straßennetzes gezeigt. Über diesen Streckenabschnitt 9 ist eine Rasterfläche 10 abgebildet, die mit Strichlinien dargestellte vertikale Gitterlinien 11 und dazu senkrecht horizontale Gitterlinien 12 aufweist. Die Rasterfläche 10 besteht aus aneinander anliegend angeordneten, quadratischen Rasterelementen 13, von denen ein Rasterelement beispielhaft durch Schraffur hervorgehoben ist. Das Rasterelement kann beispielsweise eine Seitenlänge aufweisen, die in etwa 50m des kartenmäßig erfassten Straßennetzes entsprechen. Die Position der Rasterfläche 10 in der Karte wird durch eine Ortskoordinate eindeutig bestimmt. Dies kann beispielsweise der Punkt 14 als einer der vier Eckpunkte der Rasterfläche 10 sein.

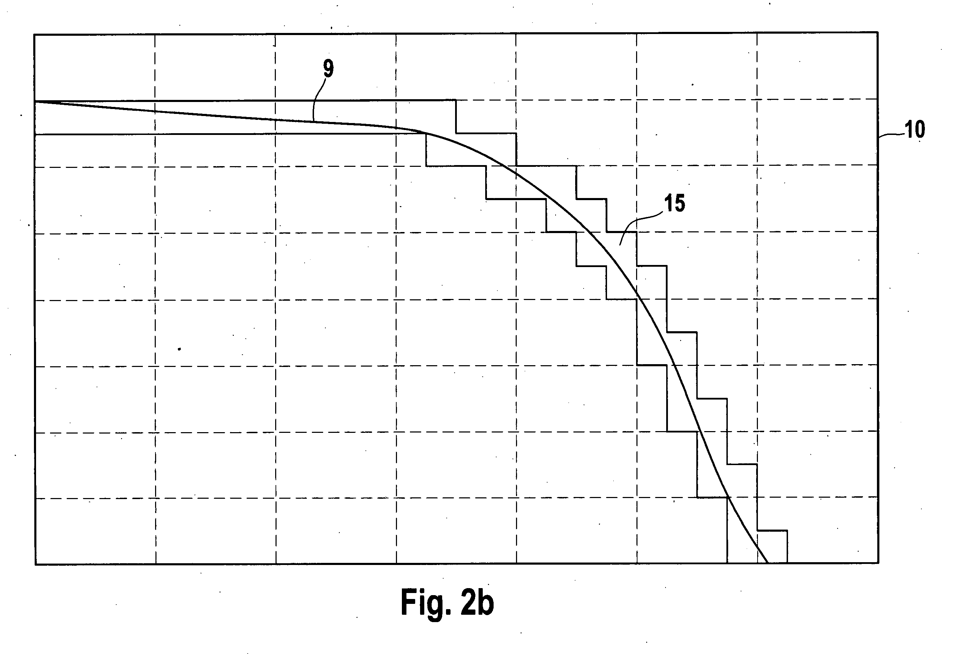

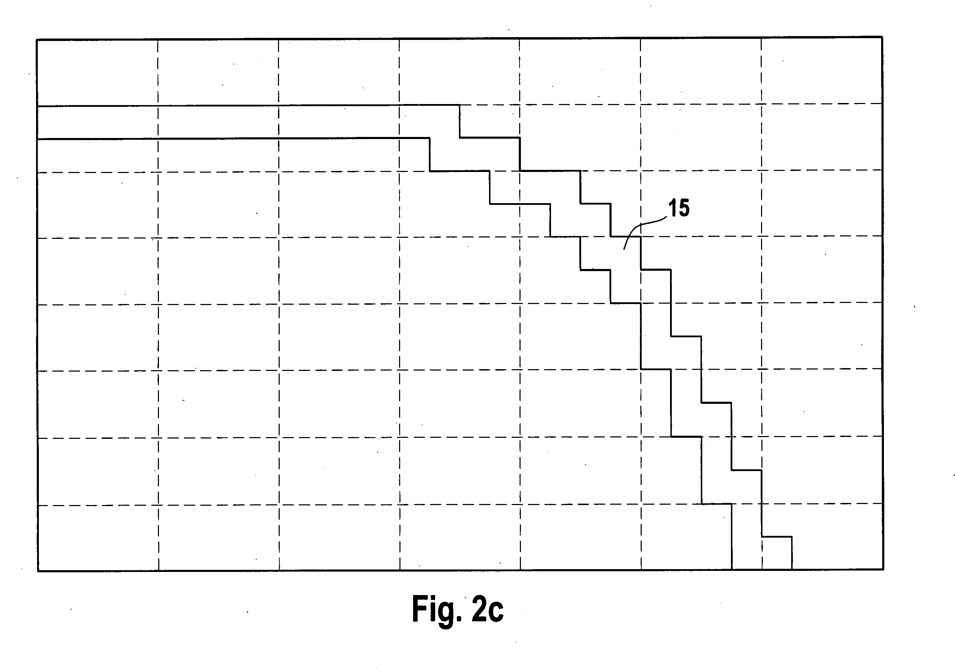

In der Figur 2b ist wiederum der Streckenabschnitt 9 innerhalb der Rasterfläche 10 dargestellt. In dieser Darstellung sind aber zusätzlich diejenigen Rasterelemente markiert, durch die der Streckenabschnitt 9 einer Straße verläuft. Die markierten Rasterelemente bilden gemeinsam eine in etwa treppenförmige Fläche 15. In der Figur 2b ist deutlich zu erkennen, dass der Streckenabschnitt 9 vollständig innerhalb der Fläche 15 liegt. Das Muster der markierten Rasterelemente bzw. die Fläche 15 ist in der Figur 2c ohne den zugrunde liegenden Streckenabschnitt 9 (Figuren 2a und 2b) des Straßennetzes dargestellt.

Das Binärbild des Streckenabschnitts 9 kann nun an eine weitere Anwendung übertragen werden, die ebenfalls ein Binärbild auf Grundlage der zur Verfiigung stehenden Kartendaten erstellt hat. Die zu übertragenden Daten enthalten sowohl die Ortskoordinate als auch das markierte Flächenmuster als Binärbild. Anhand der Ortskoordinate bildet die weitere Anwendung ebenfalls ein entsprechendes Binärbild.

Die beiden binären Muster können dann in einfacher Weise miteinander verglichen werden. Anschließend erstellt die zweite Anwendung ein binäres Muster, nachdem die Rasterfläche bezüglich der Ortskoordinate etwas verschoben wurde, beispielsweise kann die Verschiebung durch einen geeigneten Such-Algorithmus erfolgen. Durch die Verschiebung werden andere Rasterelemente von einer Straße tangiert, so dass sich das binäre Muster verändert. Wenn die binären Muster übereinstimmen, wird der gleiche Streckenabschnitt in beiden Karten lokalisiert, unabhängig davon, dass Unterschiede in der Kartendarstellung vorhanden sein können.

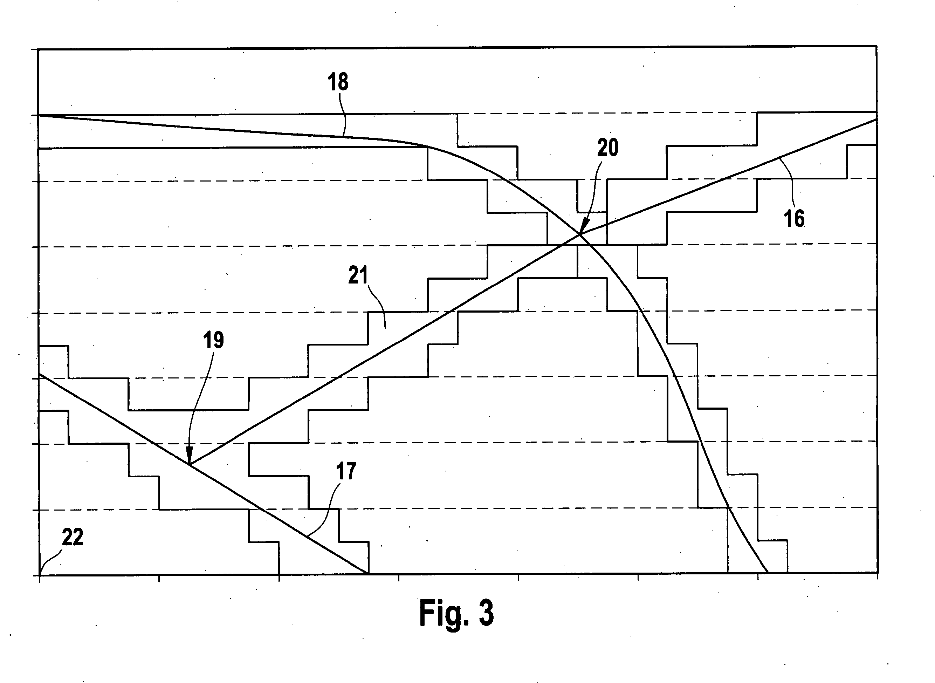

Figur 3 zeigt ein anderes Binärmuster für einen Ausschnitt des Straßennetzes mit drei Straßen 16, 17 und 18, die sich an zwei Kreuzungen 19 und 20 berühren. Das hierdurch entstehende Binärmuster 21 ist durch den Verlauf der drei Straßen 16, 17 und 18 charakteristisch für den durch die Ortskoordinate im Punkt 22 dargestellten Kartenausschnitt.

In dieser Darstellung sind auch die Rasterelemente an den Kreuzungen 19 und 20 markiert. Da im Bereich von Kreuzungen die größten Unterschiede zwischen Karten verschiedener Hersteller bestehen, kann die Umgebung gerade komplexer Kreuzungen aus der markierten Fläche herausgenommen werden, so dass nur die markierten Muster der kreuzungsfreien Straßenabschnitte zum Vergleich herangezogen werden.

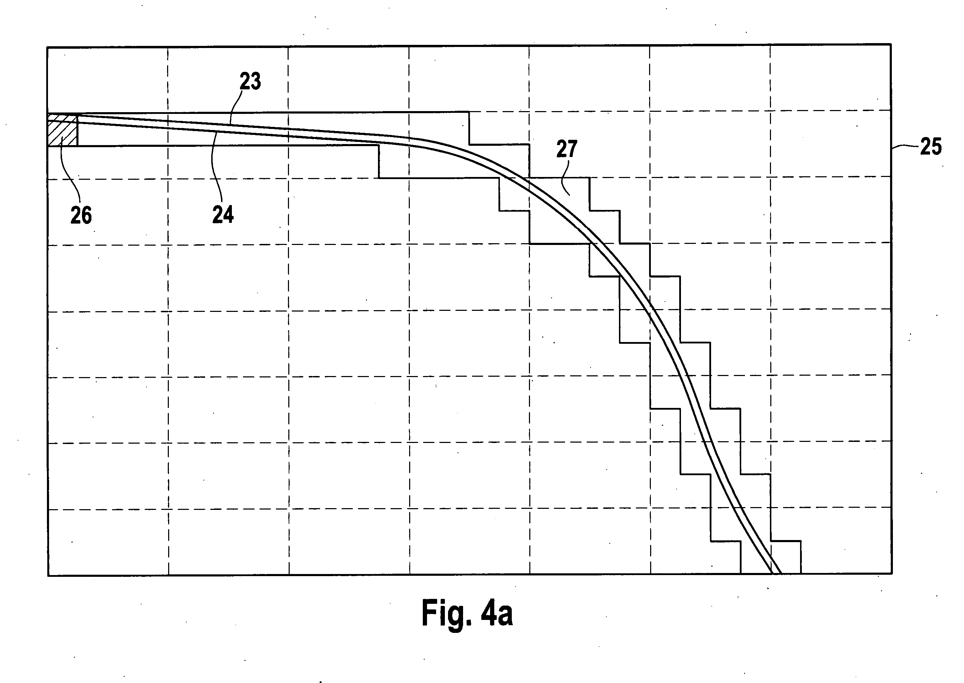

Anhand der Figuren 4a bis 4c wird nachfolgend erläutert, wie mit dem erfindungsgemäßen Verfahren zwei parallele Fahrbahnen 23 und 24 unterschieden werden können. Eine Rasterfläche 25 wird so über den Streckenabschnitt mit den beiden Fahrbahnen 23, 24 abgebildet, dass die Fahrbahn 23 in einem Endbereich an den Rand eines Rasterelementes 26 angeordnet ist. Anschließend werden diejenigen Rasterelemente markiert, durch die entweder die gewünschte Fahrbahn 23 oder die parallele Fahrbahn 24 verläuft. Dies führt dann zu einem entsprechenden Binärmuster 27.

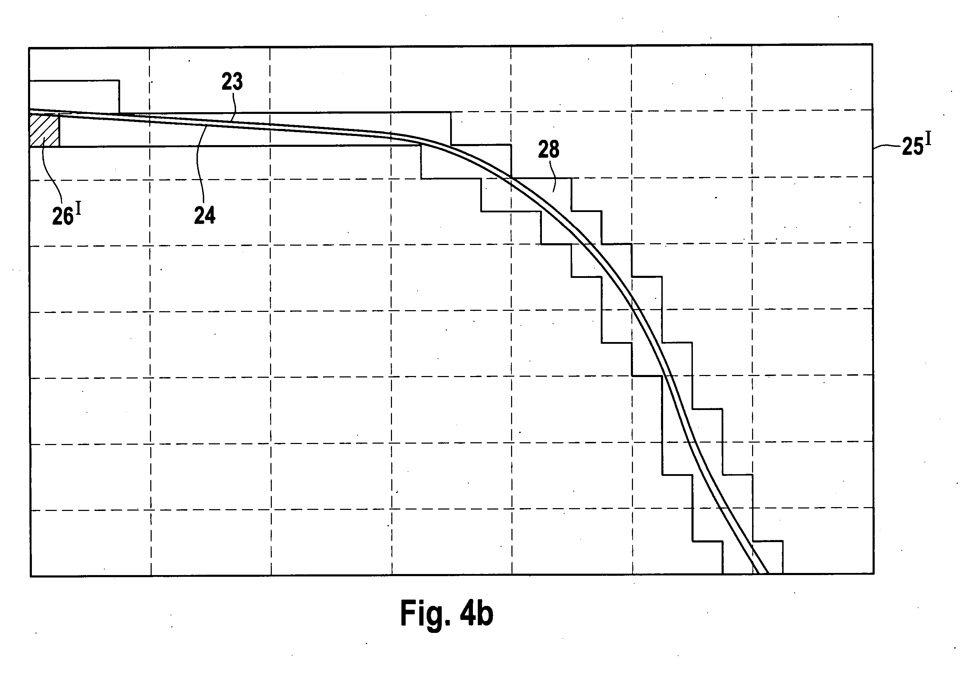

In der Figur 4b soll im Unterschied zu der in der Figur 4a dargestellten Situation die Fahrbahn 24 als Streckenabschnitt ausgewählt und lokalisiert werden. Deshalb wird die Rasterfläche 25^{I} etwas in der zugrunde liegenden Karte verschoben, so dass diesmal der Verlauf der zu lokalisierenden Fahrbahn 24 in ihrem Endbereich an dem oberen Rand des Rasterelementes 26^{I} beginnt. Werden nun diejenigen Rasterelemente innerhalb der Rasterfläche 25^{I} markiert, durch die entweder die Fahrbahn 23 oder die Fahrbahn 24 verläuft, so ergibt sich ein von dem Binärmuster 27 der Figur 4a abweichendes Binärmuster 28.

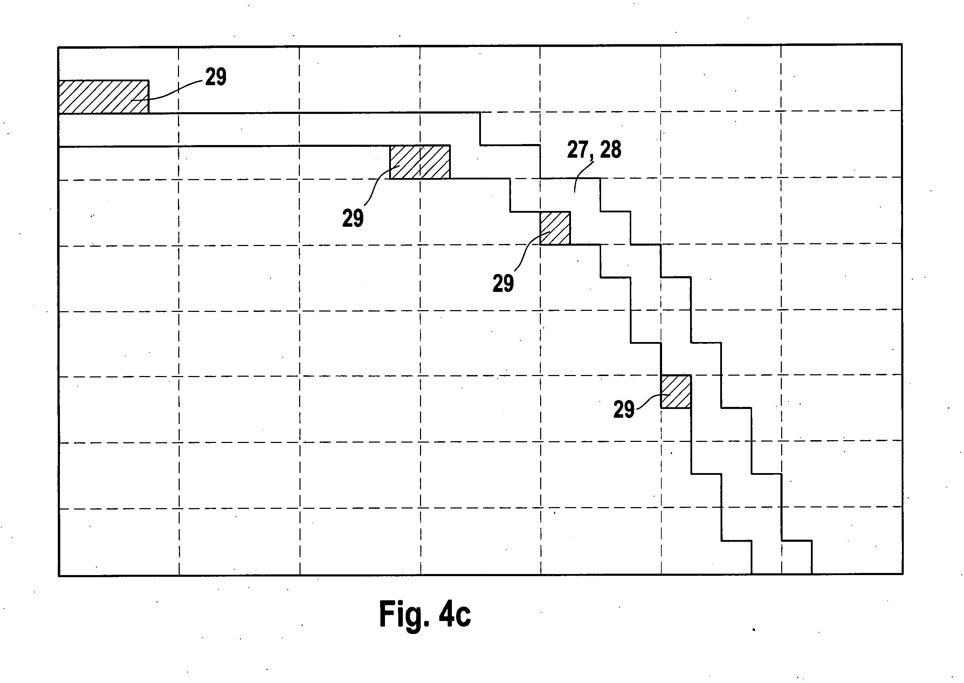

In der Figur 4c sind nun beide Binärmuster 27 und 28 gleichzeitig dargestellt. Die vorstehend erwähnten Abweichungen 29 zwischen den beiden Binärmustern 27 und 28 sind durch eine Schraffur hervorgehoben. Durch die unterschiedlichen binären Muster können die beiden Fahrbahnen 23 und 24 aus den Figuren 4 a) und 4 b) bei der Lokalisierung in einer digitalisierten Karte unterschieden werden.

## Patentansprüche

1. Verfahren zur Lokalisierung eines bestimmten Streckenabschnitts aus einer ersten digitalisierten Karte eines Verkehrswegenetzes in einer zweiten digitalisierten Karte des Verkehrswegenetzes, **gekennzeichnet durch**:
- Festlegen einer ersten Rasterfläche aus Rasterelementen an einer definierten Ortskoordinate in der ersten Karte, so dass der Streckenabschnitt in der Rasterfläche angeordnet ist, und Markieren der Rasterelemente, in denen ein Verkehrsweg verläuft;
- Festlegen einer zweiten Rasterfläche aus Rasterelementen an der Ortskoordinate in der zweiten Karte und Markieren derjenigen Rasterelemente, in denen ein Verkehrsweg verläuft;
- wobei die beiden Rasterflächen in gleicher Weise in Rasterelemente aufgeteilt sind; und
- Verschieben der zweiten Rasterfläche und erneutes Markieren der Rasterelemente, bis die Übereinstimmung der Muster der markierten Rasterelemente der ersten und der zweiten Rasterfläche maximal wird.

2. Verfahren nach Anspruch 1, **dadurch gekennzeichnet, dass** die Rasterelemente die gleiche Form und Größe aufweisen.

3. Verfahren nach Anspruch 1 oder 2, **dadurch gekennzeichnet, dass** die Rasterelemente und/oder die Rasterfläche rechteckig sind.

4. Verfahren nach einem der vorstehenden Ansprüche, **dadurch gekennzeichnet, dass** als Ortskoordinate ein Eckpunkt der Rasterfläche definiert wird.

5. Verfahren nach einem der vorstehenden Ansprüche, **dadurch gekennzeichnet, dass** die Ortskoordinate derart ausgewählt wird, dass der Streckenabschnitt durch einen Eckpunkt der Rasterfläche verläuft.

6. Verfahren nach einem der vorstehenden Ansprüche, **dadurch gekennzeichnet dass** das Muster der ersten markierten Rasterfläche binär codiert und übertragen wird.

7. Verfahren nach einem der vorstehenden Ansprüche, **dadurch gekennzeichnet, dass** die Rasterelemente markiert werden, in denen eine Straße einer bestimmten Straßenklasse verläuft.

8. Verfahren nach einem der vorstehenden Ansprüche, **dadurch gekennzeichnet, dass** beim Markieren der Rasterelemente diejenigen Rasterelemente nicht berücksichtigt werden, in denen eine Straßenkreuzung liegt.

## Claims

1. Method for locating a particular road section from a first digitized map of a traffic route network in a second digitized map of the traffic route network, **characterized by**:
- stipulation of a first grid area comprising grid elements at a defined location coordinate in the first map, so that the road section is arranged in the grid area, and marking of the grid elements which contain a traffic route;
- stipulation of a second grid area comprising grid elements at the location coordinate in the second map, and marking of those grid elements which contain a traffic route;
- wherein the two grid areas are split into grid elements in the same way, and
- displacement of the second grid area and re-marking of the grid elements until the correspondence of the patterns of the marked grid elements of the first and second grid areas is maximized.

2. Method according to Claim 1, **characterized in that** the grid elements have the same shape and size.

3. Method according to Claim 1 or 2, **characterized in that** the grid elements and/or the grid area are rectangular.

4. Method according to one of the preceding claims, **characterized in that** the location coordinate defined is a corner point of the grid area.

5. Method according to one of the preceding claims, **characterized in that** the location coordinate is selected such that the road section runs through a corner point of the grid area.

6. Method according to one of the preceding claims, **characterized in that** the pattern of the first marked grid area is binary-encoded and transmitted.

7. Method according to one of the preceding claims, **characterized in that** the grid elements which contain a road in a particular road class are marked.

8. Method according to one of the preceding claims, **characterized in that** the marking of the grid elements involves those grid elements which contain a road junction being ignored.

## Revendications

1. Procédé de localisation d'une section de trajet donnée à partir d'une première carte numérisée d'un réseau de voies de circulation dans une deuxième carte numérisée du réseau de voies de circulation, **caractérisé par** les étapes suivantes :
- Etablissement d'une première surface quadrillée composée d'éléments de quadrillage sur une coordonnée locale définie dans la première carte, de telle sorte que la section de trajet soit disposée dans la surface quadrillée, et marquage des éléments de quadrillage dans lesquels passe une voie de circulation ;
- Etablissement d'une deuxième surface quadrillée composée d'éléments de quadrillage sur la coordonnée locale dans la deuxième carte et marquage des éléments de quadrillage dans lesquels passe une voie de circulation ;
- les deux surfaces quadrillées étant divisées de la même manière en éléments de quadrillage ; et
- Déplacement de la deuxième surface quadrillée et nouveau marquage des éléments de quadrillage jusqu'à ce que la concordance des modèles d'éléments de quadrillage marqués de la première et de la deuxième surfaces quadrillées soit maximale.

2. Procédé selon la revendication 1, **caractérisé en ce que** les éléments de quadrillage présentent la même forme et la même taille.

3. Procédé selon la revendication 1 ou 2, **caractérisé en ce que** les éléments de quadrillage et/ou la surface quadrillée sont rectangulaires.

4. Procédé selon l'une des revendications précédentes, **caractérisé en ce que** l'on définit comme coordonnée locale définie un coin de la surface quadrillée.

5. Procédé selon l'une des revendications précédentes, **caractérisé en ce que** la coordonnée locale est choisie de telle sorte que la section de trajet passe à travers un coin de la surface quadrillée.

6. Procédé selon l'une des revendications précédentes, **caractérisé en ce que** le modèle de la première surface quadrillée marquée est codé en binaire et transmis.

7. Procédé selon l'une des revendications précédentes, **caractérisé en ce que** les éléments de quadrillage qui sont marqués sont ceux dans lesquels passe une route d'une catégorie de route donnée.

8. Procédé selon l'une des revendications précédentes, **caractérisé en ce que** lors du marquage des éléments de quadrillage, les éléments de quadrillage dans lesquels se trouve une intersection de routes ne sont pas pris en compte.
